# EUROPEAN PATENT SPECIFICATION

(11) **EP 1 378 834 B1**
(45) Date of publication and mention of the grant of the patent: **28.10.2015**
(21) Application number: 03014510.6
(22) Date of filing: 03.07.2003
(51) Int. Cl.: G06F 11/36

(54) **Dynamic breakpoints for computer software**
Dynamische Haltepunkte für Computersoftware
Points d'arrêt dynamiques pour programmes informatiques

(30) Priority: 04.07.2002 EP 02014790
(43) Date of publication of application: 07.01.2004
(73) Proprietor: SAP SE, 69190 Walldorf (DE)
(72) Inventor: Jentsch, Frank, 69242 Mühlhausen (DE); Wagenführer, Ralph, 67227 Frankenthal (DE)
(74) Representative: Richardt Patentanwälte PartG mbB

(56) References cited:
- US-A- 6 077 312
- US-A1- 2002 029 374
- US-B1- 6 240 545
- "Breakpoints and Single Stepping" In: Jonathan B. Rosenberg: "How Debuggers work- Chapter 6", 1 January 1996 (1996-01-01), wiley publishing copyright, New York, NY, New York ISBN: 978-0-471-14966-8 pages 107-133,

## Description

### Background of the Invention

### Field of the Invention

The technical field of this invention is in the area of electronic data processing. More particularly, the invention relates to methods, computer program products and systems for debugging a program code.

### Description of the Related Art

When developing a computer program, debugging of the program code is often a difficult and time consuming work. Debugging is often performed in the following manner: finding the program part which causes problems, finding the relevant lines of the program code, setting of breakpoints a places in the program code, which are of interest regarding the status of certain variables, and executing the program code with a debugging software (debugger). When executing the debugger, the run-time environment of the program developing environment starts executing the program code, stops its execution at the first breakpoint in the order of the execution and usually displays the content of variables for analysis. A failure in the program code (bug) needs not necessarily be present. The debugger can be used to only show the content of certain variables as well.

This procedure has certain disadvantages. The performance of the first three steps mentioned above is a lot of workload if the debugging has to be frequently repeated. Program developers and coworkers, who have to maintain the program, need a good understanding of the total program code, although only part of the code might be interesting for the debugging purpose. An other point is that the breakpoints are automatically deleted when closing the program and are not held in memory. So, when starting the debugging software anew in a new session, the breakpoints have to be set again, in order to reintroduce them into computer memory.

Thus, there is a need for a method and/or debugging system providing a more efficient solution of the problems described above.

United States patent US 006077312A discloses an apparatus, program product and method for debugging a computer program using context-sensitive breakpoints to conditionally halt execution of a computer program when the context of the computer program meets a predetermined criteria. The context of a computer program is defined by a calling history associated with the computer program that identifies, at any given instant during the execution of the computer program, the sequence of routines in the computer program that where called prior to reaching the instruction being processed at that given instant. The breakpoints are stored to a breakpoint table including a plurality of breakpoints arranged in a linked list data structure.

The book of Rosenberg, Jonathan B., 1996, "How debuggers Work" describes how debuggers work and how they can be used to produce better programs. Chapter 6 of this book, pages 107-133, "Breakpoints and Single Stepping", describes a set of requirements for breakpoint algorithms, data structures for breakpoints and various scenarios and algorithms that may be used by debuggers to fulfill the requirements stated.

### Summary of the Invention

In accordance with the invention, as embodied and broadly described herein, methods and systems consistent with the principles described herein provide for debugging computer program code by means of a debugging software, which provides software means for causing the debugging software to stop at a breakpoint set in said computer program code, comprising: -- making the stop of the debugging software dependent on one or more predefinable conditions.

In accordance with another aspect, the invention, as embodied and broadly described herein, methods and systems consistent with the principles described herein provide a computer system for debugging computer program code by means of a debugging software, which provides software means for causing the debugging software to stop at a breakpoint set in said computer program code comprising:
- a memory having program instructions;
- an input means for entering data;
- a storage means for storing data;
- a processor responsive to the program instructions to:
   -- making the stop of the debugging software dependent on one or more predefinable conditions.

Embodiments of the invention are further directed to a computer readable medium, a computer program and a carrier signal comprising instructions for debugging program code according to the method as described above. The invention is further directed to computer readable data structures containing program code for implementing the breakpoints according to the inventive concept.

Additional objects and advantages of the invention will be set forth in part in the description, or may be learned by practice of the invention. Objects and advantages will be realized and attained by means of the elements and combinations particularly pointed out in the appended independent claims. Preferred embodiments and implementations of the invention are disclosed in the detailed description section and in the dependent claims.

It is understood that both the foregoing general description and the following detailed description are exemplary and explanatory only and are not restrictive of the invention and its embodiments.

### Brief Description of the Drawings

The accompanying drawings, which are incorporated in and constitute a part of this specification, illustrate implementations of the invention and, together with the description, explain the principles of the invention and its embodiments. In the drawings,
Fig. 1 is an exemplary computer system for implementing the present invention;
Fig. 2 shows a schematic representation of an exemplary screen mask to activate or deactivate breakpoints.

### Detailed description

Reference will now be made in detail to the principles of the invention and its embodiments, examples of which are illustrated in the accompanying drawings. Examples, mentioned therein, are intended to explain the invention and not to limit the invention in any kind.

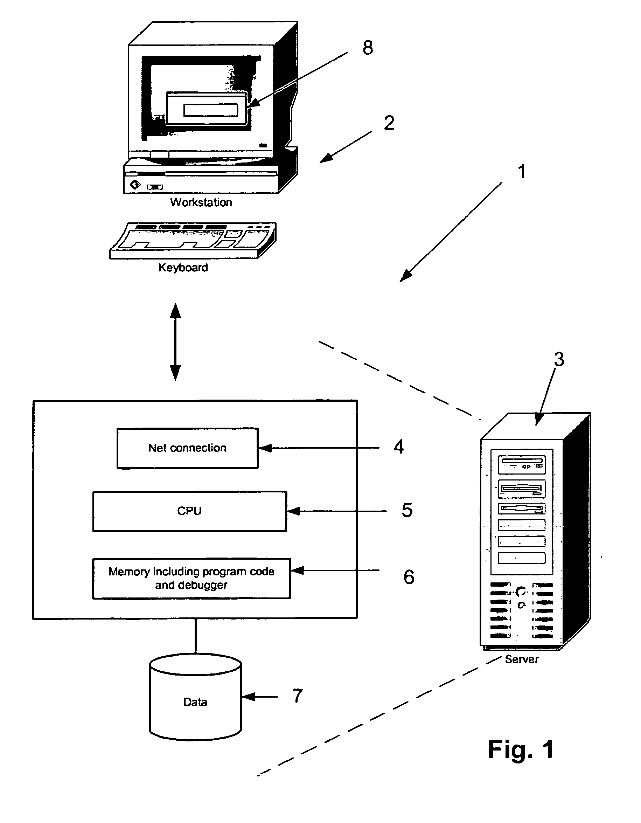

Within the scope of this description, the terms of the invention used in this specification have the meaning that is usual in programming languages like C, C++, JAVA, ABAP, ABAP Objects. The following explanations are made with reference to the figures 1 to 2.

Particularly, a breakpoint or a breakpoint instruction, both terms being used herein alternatively, is any software means, which causes a debugging software to stop a that point of the program code, at which the breakpoint or breakpoint instruction is set. Debugging a program code means, within the scope of this invention, to execute a program code by means of a debugging software. Whether the program code contains failures (bugs) or not is irrelevant. A breakpoint according to the invention and its embodiments can be implemented in a program code by a macro call. A macro thereby is a abbreviation of a program coding containing the breakpoint instruction. In the macro, the breakpoint is included in a conditional instruction having one or more conditions, which must be fulfilled, if the breakpoint instruction can be executed by the run-time environment. The implementation by a macro is not inevitably necessary. However, it reduces the programming effort considerably.

A condition (abbreviated as "cond") can be any type of logical comparison of data known to the skilled artisan. Two or more conditions can be combined by logical connections "AND", "OR" and/or "XOR" as may be appropriate in the respective case.

The conditions can be structured such, that in all macros of a given program an identical condition has to be fulfilled. In this case the identical condition works like a main switch. Further in different macros, additional to such a general condition, additional second, third, fourth or more conditions can be implemented. Structures mixed with "AND", "OR" and/or "XOR" connections are also possible.

The macros can be stored in one or more separate data structures like tables or files, which can be included into the program code by include instructions in the definition part of the program. This procedure is a possibility to make the breakpoints persistent with respect to the closing of the program.

Advantageously, different macros can be defined using different sets of conditions. The different sets of one or more conditions can be stored in one or more data structures like arrays or in one or more tables or files in volatile and/or non volatile memory. Such data structure can be made accessible for only one type of macro. The set or sets of conditions can be edited during the debugging procedure. This allows, by setting or deactivation software switches, that all or only certain types of breakpoints, such, which have one common condition included in the respective macros, can be activated or deactivated by a single step. This can be implemented e.g. by a screen mask, in which a software switch can be activated or deactivated by a mouse click or a key stroke. The screen mask within this description is a graphical user interface, by means of which reading and writing access is provided to the array, in which the one or more conditions are stored.

A further preferred implementation is a macro, in which one of the conditions is, whether a string variable handed over by the macro is identical to a respective variable stored in the arrays or tables mentioned above. In this case, a query is started to check, whether a preset string is equal to a string given in the macro.

A preferred implementation of a breakpoint, for example, can be a macro, in which the one or more conditions are realized by the classical "if" instruction as pointed out in more detail in the following example. Alternatively, "case" or "select case" or similar instructions may be used as well.
MACRO_1:
IF cond0 = TRUE AND cond1 = TRUE THEN
BREAKPOINT
ENDIF

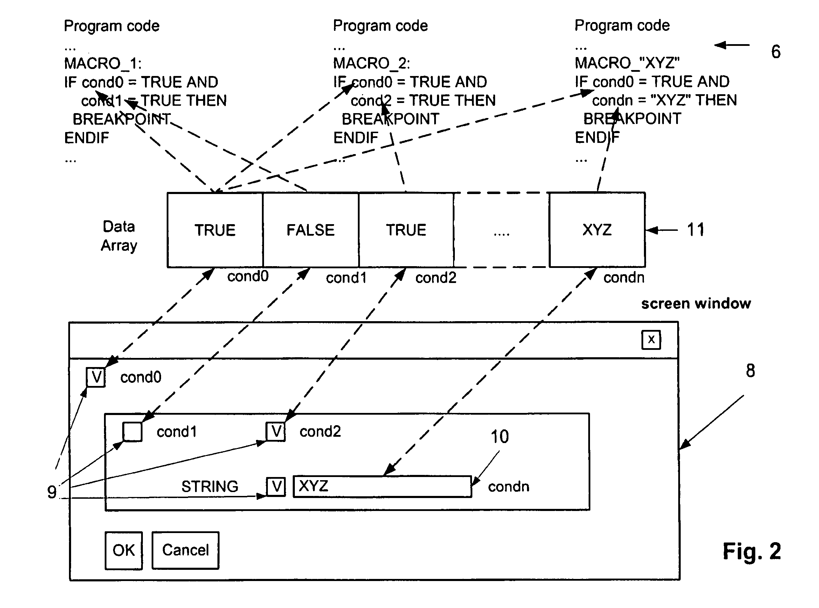

An example of an embodiment by using a breakpoint of the latter type and a screen mask is shown by the schematic drawings in figures 1 and 2:
Fig. 1 shows a computer system 1 for allowing a user to debug program code by means of a debugger according to the principles described herein. Computer system 1 comprises a server 3 with a central processing unit 5, a net connection 4 for connection with at least one input/output means 2 including screen and keyboard, at least one data storage means 7 and memory 6 including program code and debugging software. On the screen, a screen mask like a window 8 for providing read and write access to the storage means 7 is shown. In Fig. 2 the invention is described in more detail. In a program code 6 three types of macros including an if-instruction and a breakpoint instruction are inserted (breakpoint). The three types of breakpoints are named Macro_1, Macro_2 and Macro_"XYZ". In each breakpoint, a different set of conditions has to be fulfilled, if the debugger shall be caused to stop at the respective breakpoint: In Macro_1 cond0 and condl, in Macro_2 cond0 and cond2, and in Macro_XYZ cond0 and condn have to be fulfilled. Whether a condition is fulfilled or not can be decided by the contents of the respective fields of a data array 11, where respective fields are allocated to respective conditions. In the example in Fig. 2, fields named cond"i" with i from 1 to n are allocated to the conditions of the same name. In the example cond0 reads as: if the content of field cond0 in the Data Array is TRUE (i.e. contains the boolean value TRUE), then cond0 is fulfilled. Condn reads as: if the field condn of the Data Array is equal to "XYZ" (i.e. contains the string "XYZ"), then condn is fulfilled.
As indicated in Fig. 2, the fields of the data array can be accessed by read and write operations by a user via a graphical interface like a window 8 on a screen. A user can set a field in the data array to TRUE or FALSE (boolean variable) by clicking with a mouse on boxes 9 named according to the conditions they refer to. A "V" indicates that the content of the respective field in the data array 11 has the content TRUE. A blank indicates that the content of the respective field in the data array 11 has the content FALSE. The string for condn can be edited via a keyboard in a screen field 10. The screen window 8 can have additional usual attributes like OK button to save in storage and Cancel to escape without save. As can be deduced from Fig. 2, cond0 is a general condition, which allows to completely deactivate all macros in the program by one click. In the example of Fig. 2, the breakpoint instruction only in Macro_2 and Macro_"XYZ" will be executed, what means that the debugger will stop a the respective places, where the macros are incorporated in the program code.

Instead of the boolean variables used in this example any other set of variables can be used, e.g. 0 and 1, A and B or mixtures thereof.

The invention is of a general nature and can be used debugging software in programming languages or rather programming environments, which support a statement to define a breakpoint, such as FORTRAN, PASCAL, C, C++, ABAP, ABAP Objects or Visual Basic. A technical advantage of the breakpoints according to the inventive concept is that such breakpoints, when set in a program code, are persistent even if the debugging session is closed.

Computer programs based on the written description of this invention are within the skill of an experienced developer.

The invention and its embodiments can be implemented in digital electronic circuitry, or in computer hardware, firmware, software, or in combinations of them. The invention can be implemented as a computer program product, i.e., a computer program tangibly embodied in an information carrier, e.g., in a machine-readable storage device or in a propagated signal, for execution by, or to control the operation of, data processing apparatus, e.g., a programmable processor, a computer, or multiple computers. A computer program can be written in any form of programming language, including compiled or interpreted languages, and it can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

Method steps of the invention and its embodiments can be performed by one or more programmable processors executing a computer program to perform functions of the invention by operating on input data and generating output.

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory can be supplemented by, or incorporated in, ASICs (application-specific integrated circuits).

To provide for interaction with a user, the invention can be implemented on a computer having a display device such as a CRT (cathode ray tube) or LCD (liquid crystal display) monitor for displaying information to the user and a keyboard and a pointing device such as a mouse or a trackball by which the user can provide input to the computer. Other kinds of devices can be used to provide for interaction with a user as well; for example, feedback provided to the user can be any form of sensory feedback, such as visual feedback, auditory feedback, or haptic feedback; and input from the user can be received in any form, including acoustic, speech, or haptic input.

Modifications and adaptations of the present invention will be apparent to those skilled in the art from consideration of the specification and practice of the invention disclosed herein. The foregoing description of an implementation of the invention has been presented for purposes of illustration and description. It is not exhaustive and does not limit the invention to the precise form disclosed. Modifications and variations are possible in light of the above teachings or may be acquired from the practicing of the invention. For example, the described implementation includes software, but systems and methods consistent with the present invention may be implemented as a combination of hardware and software or in hardware alone. Additionally, although aspects of the present invention are described for being stored in memory, one skilled in the art will appreciate that these aspects can also be stored on other types of computer-readable media, such as secondary storage devices, for example, hard disks, floppy disks, or CD-ROM; the Internet or other propagation medium; or other forms of RAM or ROM. It is intended that the specification and examples be considered as exemplary only, with a true scope of the invention being indicated by the following claims.

## Claims

1. A method for debugging computer program code by means of a debugging software, which provides software means for causing the debugging software to stop at a breakpoint and which is set and incorporated in said computer program code, comprising:
-- making the stop of the debugging software dependent on one or more predefinable conditions,
wherein:
-- the one or more predefinable conditions are different for at least two breakpoints;
-- the one or more predefinable conditions are identical for a predefinable type of breakpoint;
-- the one or more predefinable conditions are stored in a data array, which is accessible for only one type of breakpoints; and
the setting of the breakpoint is achieved by setting a macro call, comprising said breakpoint, wherein the conditions are structured such, that in all macros of the computer program code an identical condition has to be fulfilled, and wherein the identical condition works like a main switch, and wherein in different macros, additional to said identical condition, additional second, third, fourth or more conditions are implemented, and wherein the macros are stored in one or more separate data structures, the separate data structures being external to the computer program code and being included into the computer program code by include instructions in the definition part of the computer program code.

2. The method of claim 1, wherein
-- the one or more predefinable conditions are changeable during the debugging process.

3. The method one of claims 1 to 2, wherein
-- the one or more predefinable conditions are stored in a non volatile storage.

4. The method as claimed in any of claims 1 to 3,
-- the data array is editable by means of a screen mask.

5. The method as claimed in any of claims 1 to 4, wherein
-- the data array is a table.

6. The method as claimed in any of claims 1 to 5, wherein
- the data array is accessible for read and write operations via a graphical user interface.

7. A computer system for debugging computer program code by means of a debugging software, which provides software means for causing the debugging software to stop at a breakpoint and which is set and incorporated in said computer program code comprising:
- a memory having program instructions;
- an input means for entering data;
- a storage means for storing data;
- a processor responsive to the program instructions to:
-- making the stop of the debugging software dependent on one or more predefinable conditions,
wherein
-- the one or more predefinable conditions are different for at least two breakpoints;
-- the one or more predefinable conditions are identical for a predefinable type of breakpoint;
-- the one or more predefinable conditions are stored in a data array, which is accessible for only one type of breakpoints; and
the setting of the breakpoint is achieved by setting a macro call, comprising said breakpoint, wherein the conditions are structured such, that in all macros of the computer program code an identical condition has to be fulfilled, and wherein the identical condition works like a main switch, and wherein in different macros, additional to said identical condition, additional second, third, fourth or more conditions are implemented, and wherein the macros are stored in one or more separate data structures, the separate data structures being external to the computer program code and being included into the computer program code by include instructions in the definition part of the computer program code.

8. The computer system of claim 7, wherein
-- the one or more predefinable conditions are changeable during the debugging process.

9. The computer system as claimed in any of claims 7 to 8, wherein
-- the one or more predefinable conditions are stored in a non volatile storage.

10. The computer system as claimed in any of claims 7 to 9, wherein
-- the data array is editable by means of a screen mask.

11. The computer system as claimed in any of claims 7 to 10, wherein
-- the data array is a table.

12. The computer system as claimed in any of claims 7 to 11, wherein
- the data array is accessible for read and write operations via a graphical user interface.

13. A computer readable medium comprising instructions executable on a computer for debugging computer program code by means of a debugging software, which provides software means for causing the debugging software to stop at a breakpoint set and incorporated in said computer program code, comprising instructions for allowing a user to perform the method of any of claims 1 to 6.

14. A computer program comprising program instructions for allowing a user to perform the method of any of claims 1 to 6, if said computer program is executed on a computer.

15. A computer data signal embodied in a carrier wave comprising:
computer executable instructions which cause a computer to provide means for allowing a user to perform the method of any of claims 1 to 6.

16. Computer readable data structure comprising:
program code for making the stop of a debugging software dependent on one or more predefinable conditions according to any of claims 1 to 6.

## Patentansprüche

1. Verfahren zum Debuggen von Computerprogrammcode mithilfe einer Debugging-Software, das Softwaremittel zum Bewirken, dass die Debugging-Software an einem Unterbrechungspunkt stoppt, bereitstellt, und wobei der Unterbrechungspunkt in dem Computerprogrammcode gesetzt und integriert ist, wobei das Verfahren Folgendes umfasst:
-- Abhängigmachen des Stopps der Debugging-Software von einer oder mehreren vordefinierbaren Bedingungen,
wobei:
-- die eine oder die mehreren vordefinierbaren Bedingungen für mindestens zwei Unterbrechungspunkte unterschiedlich sind;
-- die eine oder die mehreren vordefinierbaren Bedingungen für einen vordefinierbaren Typ von Unterbrechungspunkt identisch sind;
-- die eine oder die mehreren vordefinierbaren Bedingungen in einem Datenfeld gespeichert sind, das für nur einen Typ von Unterbrechungspunkten zugänglich ist; und
das Setzen des Unterbrechungspunkts erzielt wird, indem ein Makroaufruf gesetzt wird, der den Unterbrechungspunkt umfasst, wobei die Bedingungen derart strukturiert sind, dass in allen Makros des Computerprogrammcodes eine identische Bedingung erfüllt werden muss, und wobei die identische Bedingung wie ein Hauptschalter funktioniert und wobei in unterschiedlichen Makros neben der identischen Bedingung zusätzliche zweite, dritte, vierte oder mehr Bedingungen implementiert sind und wobei die Makros in einer oder mehreren separaten Datenstrukturen gespeichert sind, wobei die separaten Datenstrukturen extern zu dem Computerprogrammcode sind und in den Computerprogrammcode eingebunden werden, indem Befehle in dem Definitionsteil des Computerprogrammcodes eingebunden werden.

2. Verfahren nach Anspruch 1, wobei
-- die eine oder die mehreren vordefinierbaren Bedingungen während des Debugging-Prozesses veränderbar sind.

3. Verfahren nach einem der Ansprüche 1 bis 2, wobei
-- die eine oder die mehreren vordefinierbaren Bedingungen in einem nichtflüchtigen Speicher gespeichert sind.

4. Verfahren nach einem der Ansprüche 1 bis 3,
-- wobei das Datenfeld mithilfe einer Bildschirmmaske bearbeitbar ist.

5. Verfahren nach einem der Ansprüche 1 bis 4, wobei
-- das Datenfeld eine Tabelle ist.

6. Verfahren nach einem der Ansprüche 1 bis 5, wobei
- das Datenfeld für Lese- und Schreibvorgänge mittels einer grafischen Benutzeroberfläche zugänglich ist.

7. Computersystem zum Debuggen von Computerprogrammcode mithilfe einer Debugging-Software, das Softwaremittel zum Bewirken, dass die Debugging-Software an einem Unterbrechungspunkt stoppt, bereitstellt, und wobei der Unterbrechungspunkt in dem Computerprogrammcode gesetzt und integriert ist, wobei das Computersystem Folgendes umfasst:
- einen Speicher mit Programmbefehlen;
- ein Eingabemittel zum Eingeben von Daten;
- ein Speichermittel zum Speichern von Daten;
- einen Prozessor, der auf die Programmbefehle anspricht, um:
-- den Stopp der Debugging-Software von einer oder mehreren vordefinierbaren Bedingungen abhängig zu machen,
wobei
-- die eine oder die mehreren vordefinierbaren Bedingungen für mindestens zwei Unterbrechungspunkte unterschiedlich sind;
-- die eine oder die mehreren vordefinierbaren Bedingungen für einen vordefinierbaren Typ von Unterbrechungspunkt identisch sind;
-- die eine oder die mehreren vordefinierbaren Bedingungen in einem Datenfeld gespeichert sind, das für nur einen Typ von Unterbrechungspunkten zugänglich ist; und
das Setzen des Unterbrechungspunkts erzielt wird, indem ein Makroaufruf gesetzt wird, der den Unterbrechungspunkt umfasst, wobei die Bedingungen derart strukturiert sind, dass in allen Makros des Computerprogrammcodes eine identische Bedingung erfüllt werden muss, und wobei die identische Bedingung wie ein Hauptschalter funktioniert und wobei in unterschiedlichen Makros neben der identischen Bedingung zusätzliche zweite, dritte, vierte oder mehr Bedingungen implementiert sind und wobei die Makros in einer oder mehreren separaten Datenstrukturen gespeichert sind, wobei die separaten Datenstrukturen extern zu dem Computerprogrammcode sind und in den Computerprogrammcode eingebunden werden, indem Befehle in dem Definitionsteil des Computerprogrammcodes eingebunden werden.

8. Computersystem nach Anspruch 7, wobei
-- die eine oder die mehreren vordefinierbaren Bedingungen während des Debugging-Prozesses veränderbar sind.

9. Computersystem nach einem der Ansprüche 7 bis 8, wobei
-- die eine oder die mehreren vordefinierbaren Bedingungen in einem nichtflüchtigen Speicher gespeichert sind.

10. Computersystem nach einem der Ansprüche 7 bis 9, wobei
-- das Datenfeld mithilfe einer Bildschirmmaske bearbeitbar ist.

11. Computersystem nach einem der Ansprüche 7 bis 10, wobei
-- das Datenfeld eine Tabelle ist.

12. Computersystem nach einem der Ansprüche 7 bis 11, wobei
- das Datenfeld für Lese- und Schreibvorgänge mittels einer grafischen Benutzeroberfläche zugänglich ist.

13. Computerlesbares Medium, das Befehle umfasst, die auf einem Computer ausführbar sind, zum Debuggen von Computerprogrammcode mithilfe einer Debugging-Software, das Softwaremittel zum Bewirken, dass die Debugging-Software an einem Unterbrechungspunkt, der in dem Computerprogrammcode gesetzt und integriert ist, stoppt, bereitstellt, das Befehle umfasst, die einem Benutzer ermöglichen, das Verfahren nach einem der Ansprüche 1 bis 6 durchzuführen.

14. Computerprogramm, das Programmbefehle umfasst, die einem Benutzer ermöglichen, das Verfahren nach einem der Ansprüche 1 bis 6 durchzuführen, wenn das Computerprogramm auf einem Computer ausgeführt wird.

15. Computerdatensignal, das in einer Trägerwelle verkörpert ist, wobei das Computerdatensignal Folgendes umfasst:
computerausführbare Befehle, die bewirken, dass ein Computer Mittel bereitstellt, die einem Benutzer ermöglichen, das Verfahren nach einem der Ansprüche 1 bis 6 durchzuführen.

16. Computerlesbare Datenstruktur, die Folgendes umfasst:
Programmcode zum Abhängigmachen des Stopps einer Debugging-Software von einer oder mehreren vordefinierbaren Bedingungen nach einem der Ansprüche 1 bis 6.

## Revendications

1. Procédé pour le débogage d'un code de programme informatique au moyen d'un logiciel de débogage qui apporte les moyens logiciels pour provoquer l'arrêt du logiciel de débogage à un point de rupture et qui est placé et incorporé dans ledit code de programme informatique, comprenant :
-- l'obtention de l'arrêt du logiciel de débogage en fonction d'une ou de plusieurs conditions prédéfinies,
dans lequel
-- la ou les plusieurs conditions prédéfinies sont différentes pour au moins deux points de rupture ;
-- la ou les plusieurs conditions prédéfinies sont identiques pour un type prédéfini de point de rupture ;
-- la ou les plusieurs conditions prédéfinies sont stockées dans une table de données, qui est accessible pour au moins un type de point de rupture ; et l'établissement du point de rupture est réalisé en plaçant un appel de macro, comprenant ledit point de rupture, dans lequel les conditions sont organisées de telle sorte que, dans toutes les macros du code de programme informatique, une condition identique doit être remplie, et dans lequel la condition identique agit comme un commutateur principal, et dans lequel dans différentes macros, en complément de ladite condition identique, des seconde, troisième, quatrième conditions complémentaires ou davantage sont mises en oeuvre, et dans lequel les macros sont stockées dans une ou dans plusieurs structures de données séparées, les structures de données séparées étant extérieures au code du programme informatique et étant incluses dans le code du programme informatique par les instructions contenues dans la partie de définition du code du programme informatique.

2. Procédé selon la revendication 1, dans lequel
-- la ou les plusieurs conditions pouvant être prédéfinies sont modifiables au cours du procédé de débogage.

3. Procédé selon l'une des revendications 1 à 2, dans lequel
-- la ou les plusieurs conditions pouvant être prédéfinies sont stockées dans un stockage non volatil.

4. Procédé tel que revendiqué selon l'une quelconque des revendications 1 à 3,
-- la table des données est éditable au moyen d'une fenêtre.

5. Procédé tel que revendiqué selon une quelconque revendication 1 à 4, dans lequel
-- la table des données est un tableau.

6. Procédé tel que revendiqué selon l'une quelconque des revendications 1 à 5, dans lequel
-- la table des données est accessible aux opérations de lecture et d'écriture via une interface utilisateur graphique.

7. Système informatique pour le débogage d'un code de programme informatique au moyen d'un logiciel de débogage, qui apporte les moyens logiciels pour provoquer l'arrêt du logiciel de débogage à un point de rupture et qui est placé et incorporé dans ledit code de programme informatique, comprenant :
- une mémoire ayant des instructions de programme ;
- un moyen d'entrée pour entrer les données ;
- un moyen de stockage pour stocker les données ;
- un processeur répondant aux instructions du programme pour :
-- l'obtention de l'arrêt du logiciel de débogage en fonction d'une ou de plusieurs conditions pouvant être prédéfinies,
dans lequel
-- la ou les plusieurs conditions pouvant être prédéfinies sont différentes pour au moins deux points de rupture ;
-- la ou les plusieurs conditions pouvant être prédéfinies sont identiques pour un type de point de rupture pouvant être prédéfini ;
-- la ou les plusieurs conditions pouvant être prédéfinies sont stockées dans une table de données, qui est accessible pour uniquement un type de point de rupture ; et
la définition du point de rupture est réalisée en plaçant un appel de macro, comprenant ledit point de rupture, dans lequel les conditions sont organisées de sorte que dans toutes les macros du code de programme informatique une condition identique doit être remplie, et dans lequel la condition identique agit comme un commutateur principal, et dans lequel, dans différentes macros, en complément à ladite condition identique, des seconde, troisième, quatrième conditions complémentaires ou davantage sont mises en oeuvre, et dans lequel les macros sont stockées dans une ou dans plusieurs structures de données séparées, les structures de données séparées étant extérieures au code du programme informatique et étant incluses dans le code du programme informatique par les instructions contenues dans la partie de définition du code du programme informatique.

8. Système informatique selon la revendication 7, dans lequel
-- la ou les plusieurs conditions pouvant être prédéfinies sont modifiables au cours du procédé de débogage.

9. Système informatique tel que revendiqué dans l'une quelconque des revendications 7 à 8, dans lequel
-- la ou les plusieurs conditions pouvant être prédéfinies sont stockées dans un stockage non volatil.

10. Système informatique tel que revendiqué dans l'une quelconque des revendications 7 à 9, dans lequel
-- la table des données est éditable au moyen d'une fenêtre.

11. Système informatique tel que revendiqué dans l'une quelconque des revendications 7 à 10, dans lequel
-- la table des données est un tableau.

12. Système informatique tel que revendiqué dans l'une quelconque des revendications 7 à 11, dans lequel
-- la table des données est accessible aux opérations de lecture et d'écriture via une interface utilisateur graphique.

13. Support lisible par ordinateur comprenant les instructions exécutables par un ordinateur pour le débogage du code du programme informatique au moyen d'un logiciel de débogage, qui procure les moyens logiciels pour provoquer l'arrêt du logiciel de débogage à un point de rupture placé et incorporé dans ledit code de programme informatique, comprenant les instructions pour autoriser un utilisateur à exécuter le procédé de l'une quelconque des revendications 1 à 6.

14. Programme informatique comprenant les instructions du programme pour autoriser un utilisateur à exécuter le procédé selon l'une quelconque des revendications 1 à 6, si ledit programme informatique est exécuté par un ordinateur.

15. Signal de données informatiques incorporé dans une onde porteuse comprenant :
les instructions exécutablee par ordinateur qui déclenchent la mise à disposition par l'ordinateur des moyens pour autoriser un utilisateur à exécuter le procédé de l'une quelconque des revendications 1 à 6.

16. Structure de données lisibles par ordinateur comprenant :
le code du programme pour effectuer l'arrêt du logiciel de débogage en fonction d'une ou de plusieurs conditions pouvant être prédéfinies selon l'une quelconque des revendications 1 à 6.
